(19)

Europäisches
Patentamt
European
Patent Office
Office européen
des brevets

(11) **EP 1 882 997 A1**

(12) **EUROPEAN PATENT APPLICATION**

(43) Date of publication:
**30.01.2008 Bulletin 2008/05**

(51) Int Cl.:
**G05F 1/569** (2006.01)      **G05F 1/46** (2006.01)
**H02J 7/00** (2006.01)

(21) Application number: **06253928.3**

(22) Date of filing: **27.07.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **STMicroelectronics Limited
Marlow,
Buckinghamshire SL7 1YL (GB)**

(72) Inventor: **Darzy, Saul
Middlesex HA8 8HN (GB)**

(74) Representative: **Frost, Alex John
Boult Wade Tennant,
Verulam Gardens
70 Gray's Inn Road
London WC1X 8BT (GB)**

(54) **Battery charger with temperature-dependent power control**

(57)     A battery charger (100) is provided which has a power output (30) to charge a battery. The battery charger (100) comprises a power input (10) and a means (140) for determining a temperature at the battery charger (100). The battery charger (100) then further comprises a controller (110), which is adapted to vary the power output among a plurality of non-zero power levels, in dependence upon the difference between the determined temperature (25) and a reference temperature (130).

FIG. 2

**Description**

Technical Field

This invention relates to thermal regulation of a battery charger.

Background to the invention

Battery chargers supply power to a battery, thereby causing the charge stored in the battery to be increased. When the battery charger is operated, power dissipation in the components of the battery charger, together with the thermal properties of the components and casing, may cause the battery charger to become hot. An excessive temperature may damage the device. For example, when the battery charger is implemented in an integrated circuit, the die temperature may rise beyond an acceptable limit.

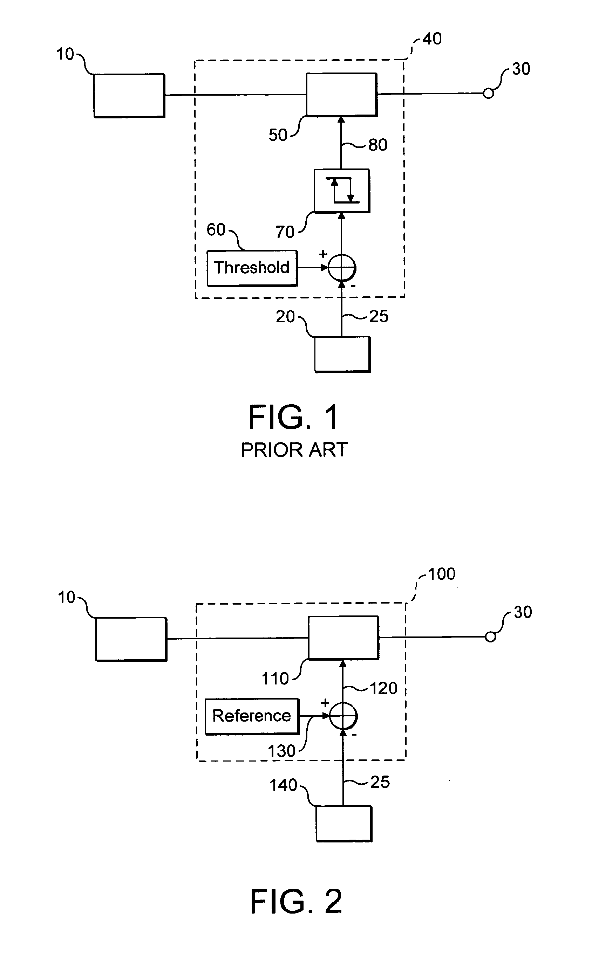

Existing battery chargers use a thermal shut down mechanism. Figure 1 shows a schematic diagram of a prior art battery charger with a thermal shutdown mechanism. The battery charger comprises a power input 10; a temperature sensor 20, having an output 25; a power output 30; and a controller 40. The controller also has a threshold input 60 and subtracts the output of the temperature gauge from this threshold input, passing this to Schmidt trigger 70. The Schmidt trigger generates a logical output which is a control signal 80 for a power switch 50. The Schmidt trigger operates according to a hysteretic function, such that its output changes from logical 0 to logical 1 at a different input as it changes from logical 1 to logical 0. When the control signal is a logical 1, the power switch allows power to flow from the power input to the power output. When the control signal is a logical 0, the power switch prevents power from flowing from the power input to the power output.

Existing battery chargers thereby prevent power output when the temperature of the device rises above a first acceptable limit, until the temperature of the device reduces to below a second acceptable limit. This thermal shutdown increases the battery charging time.

Summary of the Invention

Against this background, the present invention provides a battery charger having a power output to charge a battery comprising a power input; a means for determining a temperature within the battery charger; and a controller, adapted to vary the power output among a plurality of non-zero power levels, in dependence upon the size of the difference between the determined temperature and a reference temperature.

Preferably, the means for determining a temperature is adapted to measure the power output and to determine the temperature at the battery charger based upon the measured power output. Advantageously, the means for determining a temperature is arranged according to a thermal model for determining the dynamic variation in the temperature. This advantageously may improve the stability of the thermal regulation feedback loop.

Preferably, the controller comprises a first comparator, arranged to generate a first control signal in dependence upon the difference between the measured temperature and the reference temperature. Optionally, the comparator may comprise an operational amplifier. Advantageously, the first control signal,comprises variations in an electrical current.

In a preferred embodiment, the power output of the battery charger has an output current and the battery charger further comprises a current meter for measuring the output current; and the controller is further adapted to vary the power output in dependence upon the output current. Optionally, the controller comprises a second comparator, arranged to generate a second control signal. The second control signal may optionally comprise variations in an electrical current.

Also in a preferred embodiment the power output of the battery charger has an output voltage; the battery charger further comprises a voltage meter for measuring the output voltage; and the controller is further adapted to vary the power output in dependence upon the output voltage. Optionally, the controller comprises a third comparator, arranged to generate a third control signal. The third control signal may optionally comprise variations in an electrical current. Alternatively, the first, second and third control signals may each comprise variations in an electrical voltage, or may comprise digital signals.

Preferably at least a part of the battery charger comprises components fabricated on an integrated circuit. Alternatively, discrete components may be used.

In a second aspect, the present invention provides a method of charging a battery using a battery charger having a power output comprising determining a temperature at the battery charger; and varying the power output of the battery charger among a plurality of non-zero power levels, in dependence upon the size of the difference between the determined temperature and a reference temperature.

Preferably, the step of determining comprises measuring the power output; and determining the temperature at the battery charger based upon the measured power output. In the preferred embodiment, the step of determining the temperature based on the measured power output determines dynamic variations in the temperature according to a thermal model.

<u>Brief Description of the Drawings</u>

The invention may be put into practice in various ways, one of which will now be described by way of example only and with reference to the accompanying drawings in which:

Figure 1 shows a schematic diagram of a battery charger having a thermal shutdown mechanism according to the prior art.
Figure 2 shows a schematic diagram of a battery charger having a thermal regulation mechanism according to a first aspect of the present invention.
Figure 3 shows a circuit diagram of an embodiment of the battery charger of Figure 2.
Figure 4 shows a circuit diagram of the embodiment of the battery charger of Figure 3, additionally having output current regulation circuitry, comprising a soft start circuit; and output voltage regulation circuitry.
Figure 5 shows schematic layout of an integrated circuit embodiment of a part of the battery charger of Figure 5.
Figure 6A shows a graph of temperature against time for the battery charger of Figure 4 and Figure 5 in a first case.
Figure 6B shows a graph of temperature against time for the battery charger of Figure 4 and Figure 5 in a second case.
Figure 7 shows a circuit diagram of temperature gauge for use in the circuit of Figure 4, arranged according to a thermal model of the integrated circuit embodiment of Figure 5.
Figure 8A shows a time response of the thermal model of Figure 7 in the first case, corresponding with Figure 6A.
Figure 8B shows a time response of the thermal model of Figure 7 in the second case, corresponding with Figure 6B.
Figure 9 shows a frequency response of the thermal model of Figure 7.
Figure 10 shows a circuit diagram of a soft start circuit for use in the battery charger of Figure 4.

<u>Specific Description of a Preferred Embodiment</u>

Referring first to Figure 2, a schematic diagram of a battery charger according to the present invention is shown.
The battery charger comprises a power input 10; a temperature gauge 140 for determining a temperature within the battery charger and having an output 25; and a power output 30. The power output may be adapted to receive a battery to be charged. The battery charger further comprises a controller 100, which controls the power output.
The controller comprises a power control circuit 110, which controls the flow of power from the power input to the power output and may thereby vary the power output among a plurality of values, at least two of the values being non-zero. The power control circuit is controlled by a control signal 120. The control signal is generated by subtracting the output of the temperature gauge from a reference 130.
The battery charger therefore operates a thermal regulation feedback loop. The power input 10 provides a power. The power control circuit 110 is a driver circuit which controls the power output 30. Power is dissipated in the power control circuit, causing the temperature within the battery charger to increase. The temperature is determined by the temperature gauge 140 and the temperature output 25 is subtracted from a reference 130 to generate the control signal 120. The greater the difference between the determined temperature and the reference, the larger the control signal.
As the size of the control signal increases, the power control circuit increases its variation of the power output. When the control signal is positive, the power control circuit may increase the power output, thereby increasing power dissipation. This may increase temperature. When the control signal is negative the power control circuit may decrease the power output, thereby decreasing power dissipation and hence reducing the temperature within the battery charger.
For effective thermal regulation, it is desirable that the feedback loop is stable. To ensure this, it is desirable that the determined temperature take account of dynamic thermal behaviour of the battery charger. The present invention advantageously incorporates this to provide a stable feedback loop.

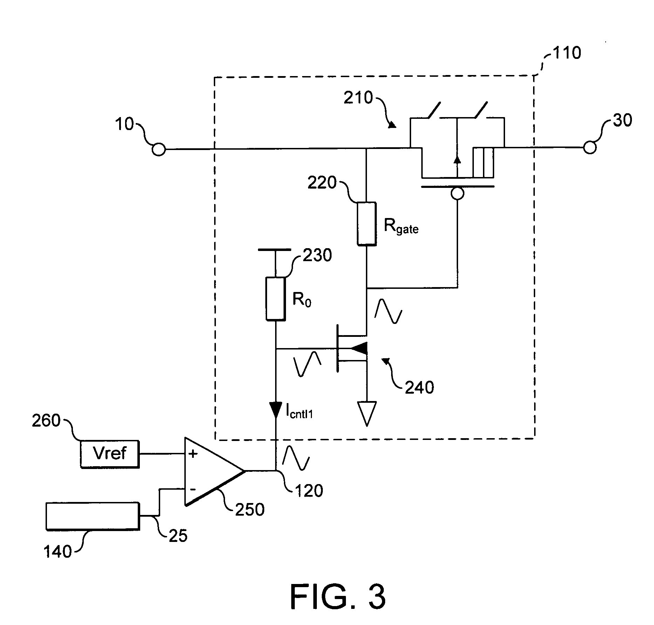

Figure 3 shows a circuit diagram of an embodiment of part of the battery charger of Figure 2. The circuit comprises a power input 10 and power output 30. The circuit further comprises a reference voltage generator 260 and a temperature gauge 140 having a voltage output 25. These are both coupled to an operational amplifier 250 acting as a comparator, which provides a control signal 120. The control signal is provided to a power control circuit 110.
The power control circuit comprises a resistor 230 of resistance $R_0$; a driver transistor 240; a gate resistor 220 of resistance $R_{gate}$; and a power transistor 210. The control signal is coupled to one end of the resistor 230. The other end of the resistor 230 is coupled to a fixed positive voltage. The control signal is also coupled to the gate of the driver transistor. The drain of the driver transistor is grounded. The source of the driver transistor is coupled to one end of the gate resistor 220 and to the gate of the power transistor 210. The other end of the gate resistor 220 is coupled to the source of the power transistor 210. The drain of the power transistor is coupled to the power output 30.
The power control circuit thereby controls the power flowing from the power input to the power output according to the control signal 120. The arrangement of the resistor 230 determines that the control signal 120 comprises a variation in current ($I_{cntl1}$). The operational amplifier 250 is therefore a transconductance amplifier. The lower the output of the temperature gauge with respect to the reference voltage, the greater the current ($I_{cntl1}$). The greater this current, the greater the gate voltage at the power transistor 210 and hence the greater the power output at 30.

The greater the output of the temperature gauge with respect to the reference voltage, the lower the current comprising the control signal 120. The lower this current, the lower the gate voltage at the power transistor 210 and hence the lower the power output at 30.

This circuit thereby provides negative feedback, since when the temperature increases above a reference, the power output is reduced and when the temperature decreases below the reference, the power output is increased. The power output comprises a charging current which flows into the battery to be charged.

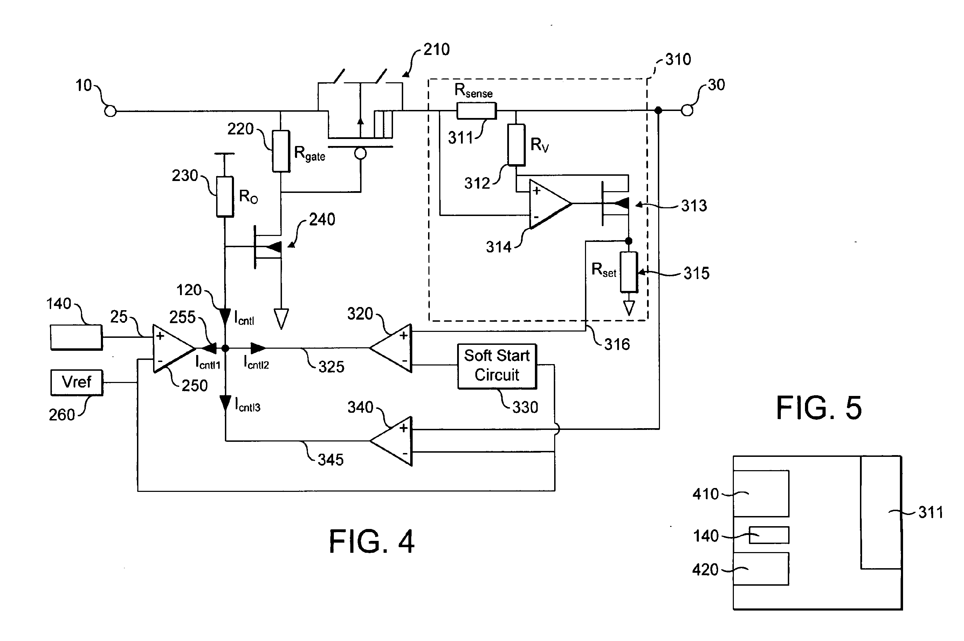

Advantageously, the battery charger may additionally provide current and voltage regulation. Figure 4 shows the circuit diagram of the battery charger of Figure 3 further comprising current and voltage regulation circuitry.

The circuit additionally comprises a current meter 310; a current control operational amplifier 320; a soft start circuit 330; and a voltage control operational amplifier 340.

In the preferred embodiment, the current meter 310 comprises a current sense resistor 311, of resistance $R_{sense}$; a first resistor 312 of resistance $R_v$; a transistor 313; an operational amplifier 314; and a second resistor 315. The output of the current meter 316 is a voltage signal representative of the current flowing through resistor 311.

The output of the current meter is provided to the current control operational amplifier 320. The reference voltage 260 is provided to the soft start circuit 330. The output of the soft start circuit is provided to the current control operational amplifier 320. The soft start circuit is adapted to vary its output on switch on, to ramp up the power output slowly, to avoid possible overshoot in the charging current. The output of the current control operational amplifier comprises a current ($I_{cntl2}$) and is used to generate the control signal 120.

The power output 30 also comprises a voltage. The power output is coupled to a voltage control operational amplifier 340. The reference is also coupled to the voltage control operational amplifier. The output of the voltage control operational amplifier 345 comprises a current ($I_{cntl3}$) and is also used to generate the control signal 120.

The temperature control operational amplifier 250 has an output 255. The control signal 120 is therefore generated by coupling together the output of the temperature control operational amplifier 255, the current control operational amplifier 325 and the voltage control operational amplifier 355. Each of these three outputs comprises a current. By coupling the outputs together, the three currents are summed together.

Advantageously, the battery charger of Figure 4 provides combined temperature, current and voltage regulation using a single control signal and a single power control circuit.

In theory, the steady state temperature within the battery charger (i.e. at the hottest point) is given by $T_j$:

$$T_j = T_a + \Delta T$$

$$\Delta T = R_{TH} \times P_i = R_{TH} \times I_{charge} \times V_d$$

where $T_a$ is the ambient temperature, $P_i$ is the power dissipation in the battery charger, $I_{charge}$ is the charging current and $V_d$ is the voltage between the power input and the power output.

The battery charger preferably determines the temperature within the battery charger. The thermal sensor gives a direct measurement of the temperature within the battery charger. However, the thermal model relates the temperature to the power dissipation of the battery charger. The temperature gauge hence comprises a temperature sensor and processes the power output according to a thermal model to thereby determine the temperature within the battery charger according to the power dissipation.

There may be some delay between the power output changing and a change in the temperature within the battery charger. The thermal model advantageously accounts for such dynamic thermal behaviour of the battery charger. This ensures the stability of the thermal regulation feedback loop. The thermal model may be different for different embodiments, layouts, constructions and materials of the battery charger. In the preferred embodiment, the battery charger is fabricated, at least in part, on an integrated circuit. This insures the stability of the thermal regulation feedback loop. The thermal model may be different for different embodiments, layouts, constructions and materials of the battery charger. In the preferred embodiment, the battery charger is fabricated, at least in part, on an integrated circuit.

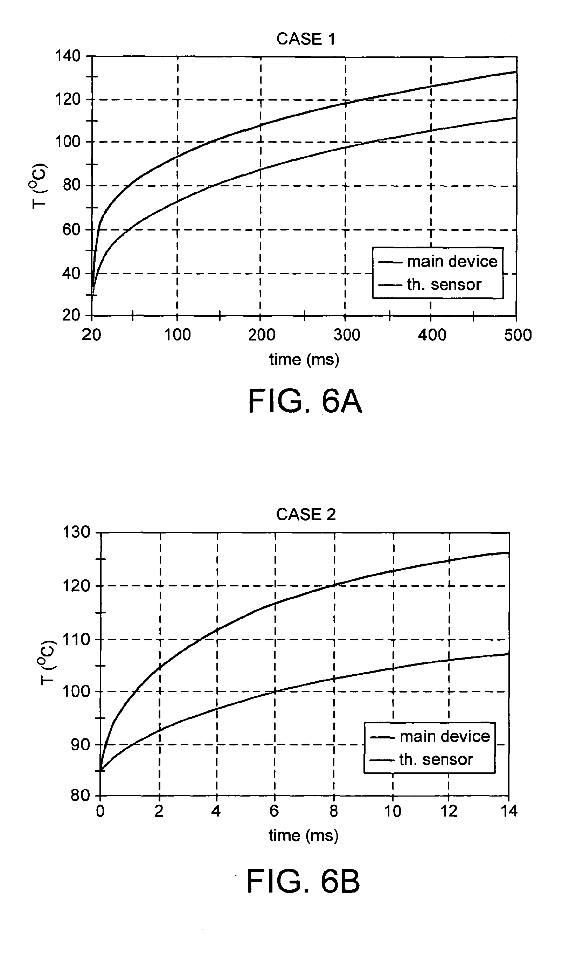

Figure 5 shows a schematic layout of an integrated circuit package as an embodiment of a part of the battery charger of Figure 4. The integrated circuit includes a main part 410, which may include the operational amplifiers of Figure 4; the temperature gauge 140; the current sense resistor 311; and an interface portion 420. The interface portion may be a USB device. In a specific embodiment of the integrated circuit of Figure 5, the area of the main part is 0.644mm$^2$; the interface portion 0.32mm$^2$ and the current sense resistor 0.45mm$^2$. The thermal model of the embodiment of the battery charger may be determined by analysing the thermal characteristics of the battery charger.

Figure 6A and Figure 6B show the variation of $T_j$ against time for the embodiment of the battery charger in the integrated circuit package of Figure 5, as obtained by thermal analysis for two different cases. A certain value of thermal resistance ($R_{TH}$) for the integrated circuit package is defined in units of °C/W. For Figures 6A and 6B, $R_{TH}$ is approximately 56 °C/W, the power consumed by the main device is 3.52W, the USB device is off and the power consumed by resistor $R_{sense}$ is 0.128W.

For Figure 6A, $T_a$ is 25°C. After approximately 400ms, $T_j$ rises to 125°C, which is an upper limit on the acceptable temperature. For Figure 6B, $T_a$ is 85°C. After 13ms, $T_j$ rises to the 125°C limit. There may be a temperature differential of approximately 20°C between the chip hottest point and the thermal sensor.

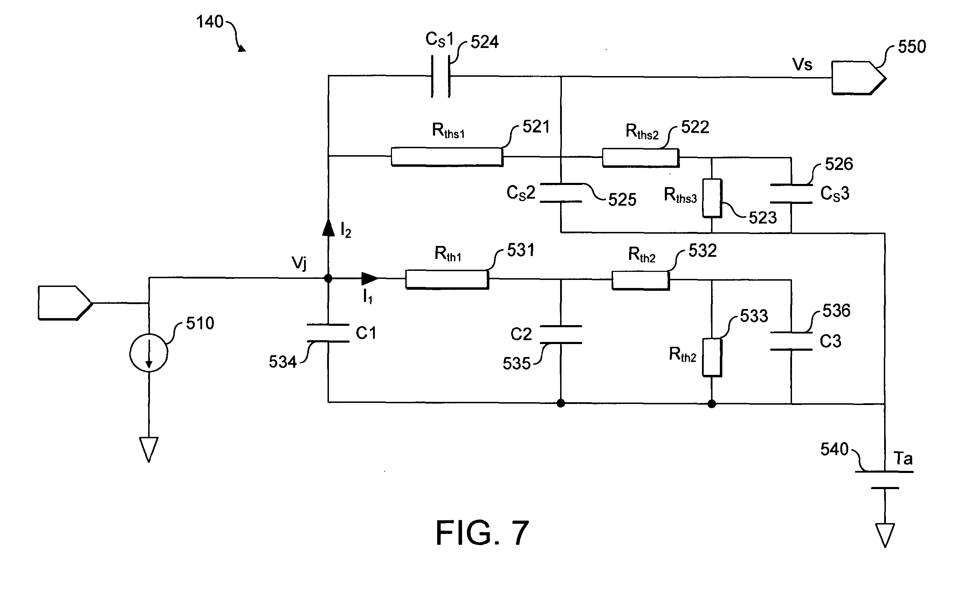

Based on these responses, Figure 7 shows a circuit diagram of a temperature gauge arranged according to a thermal model of the battery charger as embodied by Figure 5.

The model comprises a power to current converter 510, which measures the power output of the device and generates a current representative of the power output; resistors 521, 522, 523, 531, 532, 533 of resistance values $R_{ths1}$, $R_{ths2}$, $R_{ths3}$, $R_{th1}$, $R_{th2}$, and $R_{th3}$ respectively; capacitors 524, 525, 526, 534, 535, 536 of capacitance values $Cs1$, $Cs2$, $Cs3$, $C1$, C2 and C3 respectively; voltage source 540; and voltage output 550. The voltage of the voltage source, $V_a$, is equivalent to that provided by a temperature measuring device when measuring temperature $T_a$. A temperature measuring device may optionally be provided to measure $V_a$. Currents $I_1$ and $I_2$ are also indicated.

At steady state, the voltage at point $V_j$ is given as follows:

$$V_j = V_a + I_1 \times \left( R_{th1} + R_{th2} + R_{th3} \right).$$

This corresponds to the temperature at the hottest point of the device. The voltage at the output 550, $V_s$, at steady state is therefore:

$$V_s = V_j - I_2 \times R_{ths1}.$$

This corresponds with the voltage at the output of the temperature gauge.

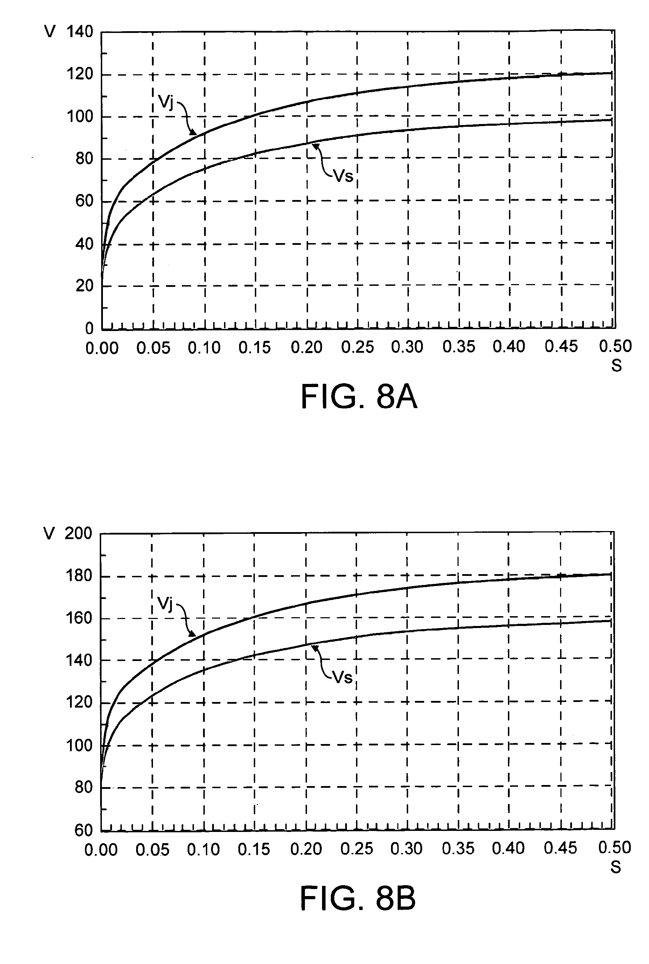

Figure 8A shows the time response of the thermal model of Figure 7, when in the same conditions as those used to obtain Figure 6A. Figure 8B shows the time response of the thermal model of Figure 7, when in the same conditions as those used to obtain Figure 6B.

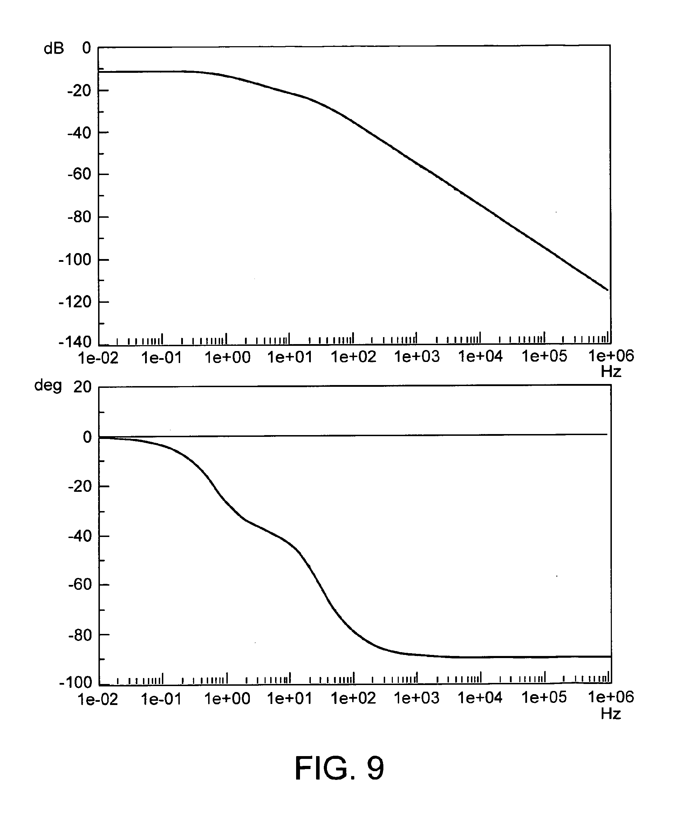

Figure 9 shows the frequency and phase response of the thermal model of Figure 7.

The open loop transfer function (TF) of the thermal feedback loop for the device of Figure 3 may be given by the following expression:

$$TF = k \times G_{TH}(s) \times G_{a1}(s) \times G_d(s),$$

where k is a constant, $G_{TH}(s)$ is the transfer function of the thermal model, $G_{a1}(s)$ is the transfer function of the operational amplifier 250 and $G_d(s)$ is the transfer function of the power control circuit 110.

The frequency response for $G_{TH}(s)$ is shown in Figure 9. This indicates that the thermal model has a low frequency pole. This may be made the dominant pole in the loop by making the other poles from $G_{a1}(s)$ and $G_d(s)$ non-dominant. Advantageously, no compensation is needed for the operational amplifier.

If the thermal behaviour shows a fast response that leads to a high frequency pole in the extracted thermal model, then the dominant pole to stabilise the loop should be provided by compensating the operational amplifier 250.

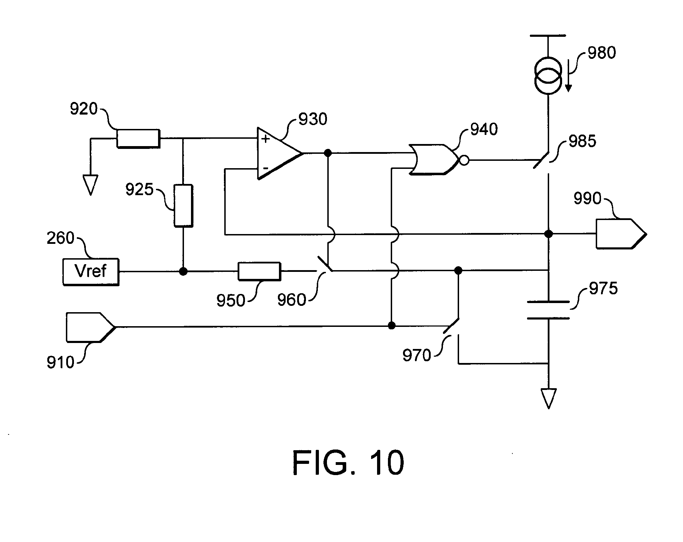

Figure 10 shows a soft start circuit for use with the battery charger of Figure 4. The circuit has two inputs: a voltage reference signal, the output of the reference voltage generator 260; and a charge start signal 910. The charge start signal is preferably a digital signal.

Resistors 920 and 925 are preferably configured such that the voltage at the point where the two resistors connect is 95% of the voltage reference signal. This voltage is provided as one input to comparator 930. The other input to the comparator is the circuit output 990. The output from the comparator is provided both to control switch 960, which connects the voltage reference signal, through resistor 950 to the output 990; and as an input to NOR gate 940. A second input to the NOR gate is provided by the charge start signal 910.

When the charging process starts, such that the charge start signal is high, switch 985 is closed and switches 960 and 970 are open. Hence, the output 990 is provided by a current source 980 which charges a capacitor 975. The output voltage therefore slowly ramps up, as the capacitor is being charged. When the output voltage reaches 95% of the voltage reference signal, the output of the comparator 930 becomes high. Hence, switch 960 is closed and switch 985 is opened. Then, the voltage output will rise to be the same as the reference voltage.

The soft start circuit provides a slow and linear ramping of the charge current. Hence a long soft start time can advantageously be achieved without the need for a big resistor.

Whilst a specific embodiment has been described, the skilled person may contemplate various modifications and substitutions. For instance, temperature gauge has been described which converts a measured power output into a temperature measurement with dynamic behaviour. Optionally the skilled person may instead consider alternative means for determining a temperature including sensors, such as a thermocouple device or a semiconductor temperature sensor.

Although the embodiments described use analogue signals, the skilled person will understand that digital signals may be equivalently used, together with digital logic controllers and analogue to digital and digital to analogue converters where necessary. The invention may be implemented at least in part on an integrated circuit. Alternatively, it may be implemented, at least in part, in discrete components, or using programmable logic, or in software.

The skilled person will also understand that the thermal model may be adapted for different embodiments and constructions of the battery charger.

**Claims**

1. A battery charger having a power output to charge a battery comprising:

   a power input;
   a means for determining a temperature at the battery charger;
   a controller, adapted to vary the power output among a plurality of non-zero power levels, in dependence upon the difference between the determined temperature and a reference temperature.

2. The battery charger of claim 1, wherein the means for determining a temperature is adapted to measure the power output and to determine the temperature at the battery charger based upon the measured power output.

3. The battery charger of claim 2, wherein the means for determining a temperature is arranged according to a thermal model for determining the dynamic variation in the temperature at the battery charger based upon the measured power output.

4. The battery charger of claim 1 wherein the means for determining a temperature comprises a temperature sensor arranged to measure a temperature at the battery charger.

5. The battery charger of any preceding claim, wherein the power output of the battery charger has an output current and the controller is adapted to vary the power output by varying the output current.

6. The battery charger of any preceding claim wherein the controller comprises a first comparator, arranged to generate a first control signal in dependence upon the difference between the determined temperature and the reference temperature.

7. The battery charger of claim 6, wherein the controller further comprises:

   a power control circuit, arranged to vary the power output in dependence upon the first control signal.

8. The battery charger of claim 7, wherein the power control circuit comprises a transistor.

9. The battery charger of any of claims 6 to 8, wherein the first comparator comprises an operational amplifier.

10. The battery charger of any of claims 6 to 9, wherein the first control signal comprises variations in an electrical current.

11. The battery charger of any preceding claim, wherein the power output of the battery charger has an output current and the battery charger further comprises:

a current meter for measuring the output current; and
wherein the controller is further adapted to vary the power output in dependence upon the output current.

12. The battery charger of claim 11 further comprising:

a soft start circuit, adapted to provide a soft start reference which increases towards a predetermined value; and
wherein the controller is adapted to vary the power output in dependence upon the difference between the output current and the soft start reference.

13. The battery charger of claim 11 when dependent on claim 6 or claim 10, wherein the controller further comprises a second comparator, arranged to generate a second control signal in dependence upon the difference between the measured output current and a reference output current.

14. The battery charger of claim 13, wherein the second control signal comprises variations in an electrical current.

15. The battery charger of claim 13 or claim 14 wherein the controller further comprises:

a signal summer for generating a common control signal by summing the first control signal and the second control signal; and
a power control circuit, arranged to vary the power output in dependence upon the common control signal.

16. The battery charger of any preceding claim, wherein the power output of the battery charger has an output voltage and the battery charger further comprises:

a voltage meter for measuring the output voltage; and
wherein the controller is further adapted to vary the power output in dependence upon the output voltage.

17. The battery charger of claim 16 when dependent on claim 6, claim 10, claim 13 or claim 14, wherein the controller further comprises a third comparator, arranged to generate a third control signal in dependence upon the difference between the measured output voltage and a reference output voltage.

18. The battery charger of claim 17 when dependent on claim 6 or claim 10 wherein the controller further comprises:

a signal summer for generating a common control signal by summing the first control signal and the third control signal; and
a power control circuit, arranged to vary the power output in dependence upon the common control signal.

19. The battery charger of claim 16 when dependent on claim 13 or claim 14 wherein the controller further comprises:

a signal summer for generating a common control signal by summing the first control signal, the second control signal and the third control signal; and
a power control circuit, arranged to vary the power output in dependence upon the common control signal.

20. The battery charger of any of claims 17 to 19, wherein the third control signal comprises variations in an electrical current.

21. The battery charger of any preceding claim wherein at least a part thereof comprises components fabricated on an integrated circuit.

22. The battery charger of claim 21 wherein the determined temperature is a temperature at the die of the integrated circuit.

23. A method of charging a battery using a battery charger having a power output comprising:

determining a temperature at the battery charger; and
varying the power output of the battery charger among a plurality of non-zero power levels, in dependence upon the size of the difference between the determined temperature and a reference temperature.

24. The method of charging a battery of claim 23, wherein the step of determining comprises:

measuring the power output; and
determining the temperature at the battery charger based upon the measured power output.

25. The method of charging a battery of claim 24, wherein the step of determining the temperature at the battery charger based upon the measured power output determines dynamic variations in the temperature according to a thermal model.

26. The method of charging a battery of any of claims 23 to 25, wherein the power output of the battery charger has an output current and the step of varying the power output comprises varying the output current.

27. The method of charging a battery of claim 26, further comprising:

measuring the output current; and
varying the power output in dependence upon the measured output current.

28. The method of charging a battery of any of claims 23 to 27, wherein the power output has an output voltage, and further comprising:

measuring the output voltage; and
varying the power output in dependence upon the measured output voltage.

FIG. 1

PRIOR ART

FIG. 2

FIG. 3

FIG. 4

FIG. 5

FIG. 6A

FIG. 6B

FIG. 7

EP 1 882 997 A1

FIG. 8A

FIG. 8B

FIG. 9

FIG. 10

**European Patent Office**

**EUROPEAN SEARCH REPORT**

Application Number

EP 06 25 3928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 850 006 A (SASAKI YUTAKA [JP] ET AL) 18 July 1989 (1989-07-18) | 1,4-11, 16,23, 26-28 | INV. G05F1/569 G05F1/46 |
| Y | * abstract *<br><br>* column 2, line 10 - line 13; figures 4B,5 *<br>* column 5, line 4 - column 6, line 8 *<br>----- | 2,3,12, 21,22, 24,25 | H02J7/00 |
| X | US 2004/095097 A1 (OGLESBEE JOHN W [US] ET AL) 20 May 2004 (2004-05-20)<br><br>* the whole document *<br>----- | 1,4-11, 13-16, 26-28 | |
| Y | US 2003/141767 A1 (ROEPKE STEFAN [DE] ET AL) 31 July 2003 (2003-07-31)<br>* abstract *<br>* paragraphs [0004], [0016], [0017]; figures 2,3 *<br>----- | 2,24 | |
| Y | WO 97/11582 A (BOSCH GMBH ROBERT [DE]; BORHO LOTHAR [DE]; ECKERT KLAUS [DE]; KERN ROB) 27 March 1997 (1997-03-27)<br>* abstract *<br>* page 5, line 22 - page 7, line 4; figure 2 *<br>----- | 3,25 | TECHNICAL FIELDS SEARCHED (IPC)<br><br>G05F<br>H02J<br>H02H |
| Y | JP 2005 312157 A (SHARP KK) 4 November 2005 (2005-11-04)<br>* abstract; figures 1,2 *<br>----- | 12 | |
| Y | US 2004/012905 A1 (YAMAMOTO SHINZOU [JP]) 22 January 2004 (2004-01-22)<br>* abstract; figures 1,2,8 *<br>----- | 21,22 | |

The present search report has been drawn up for all claims

| Place of search | Date of completion of the search | Examiner |
|---|---|---|
| Munich | 19 December 2006 | Braccini, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 3928

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2006

| Patent document cited in search report | | | Publication date | Patent family member(s) | | | Publication date |
|---|---|---|---|---|---|---|---|
| US 4850006 | | A | 18-07-1989 | GB | 2197761 | A | 25-05-1988 |
| | | | | JP | 2072341 | C | 25-07-1996 |
| | | | | JP | 7114382 | B | 06-12-1995 |
| | | | | JP | 63127625 | A | 31-05-1988 |
| US 2004095097 | A1 | | 20-05-2004 | NONE | | | |
| US 2003141767 | A1 | | 31-07-2003 | CN | 1435930 | A | 13-08-2003 |
| | | | | DE | 10203051 | A1 | 14-08-2003 |
| | | | | GB | 2385434 | A | 20-08-2003 |
| | | | | JP | 2003248519 | A | 05-09-2003 |
| WO 9711582 | | A | 27-03-1997 | EP | 0852894 | A1 | 15-07-1998 |
| | | | | ES | 2148771 | T3 | 16-10-2000 |
| | | | | JP | 11512560 | T | 26-10-1999 |
| JP 2005312157 | | A | 04-11-2005 | NONE | | | |
| US 2004012905 | A1 | | 22-01-2004 | JP | 2004054345 | A | 19-02-2004 |
| | | | | US | 2005213276 | A1 | 29-09-2005 |

EPO FORM P0459

For more details about this annex : see Official Journal of the European Patent Office, No. 12/82